(19) **Europäisches Patentamt**
**European Patent Office**
**Office européen des brevets**

(11) **EP 2 405 287 B1**

(12) **FASCICULE DE BREVET EUROPEEN**

(45) Date de publication et mention
de la délivrance du brevet:
**20.03.2013 Bulletin 2013/12**

(21) Numéro de dépôt: **11172464.7**

(22) Date de dépôt: **04.07.2011**

(51) Int Cl.:
*G01S 17/58* (2006.01)          *G01S 17/95* (2006.01)
*G01N 21/47* (2006.01)          *G01N 15/00* (2006.01)
*G01B 9/02* (2006.01)          *G01S 7/481* (2006.01)

(54) **Dispositif dé telédétection laser et procédé d'interférometrie**

Vorrichtung zur Laserfernerkennung, und Interferometrieverfahren

Device for remote laser detection and interferometry method

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.07.2010 FR 1055579**

(43) Date de publication de la demande:
**11.01.2012 Bulletin 2012/02**

(73) Titulaire: **CENTRE NATIONAL D'ETUDES
SPATIALES
75001 Paris (FR)**

(72) Inventeurs:
• **Bruneau, Didier**
**91120 Palaiseau (FR)**
• **Montmessin, Franck**
**78990 Elancourt (FR)**
• **Faure, Benoît**
**31500 Toulouse (FR)**
• **Pelon, Jacques**
**75011 Paris (FR)**

(74) Mandataire: **Regimbeau**
**20, rue de Chazelles**
**75847 Paris Cedex 17 (FR)**

(56) Documents cités:
**EP-A1- 2 042 876          WO-A1-2004/092767
US-A1- 2007 046 945**

• **NING Y N ET AL: "Fibre-optic interferometric
systems using low-coherence light sources",
SENSORS AND ACTUATORS A, ELSEVIER
SEQUOIA S.A., LAUSANNE, CH, vol. 30, no. 3, 1
février 1992 (1992-02-01), pages 181-192,
XP026486948, ISSN: 0924-4247, DOI: DOI:
10.1016/0924-4247(92)80118-M [extrait le
1992-02-01]**

**Description**

DOMAINE TECHNIQUE GENERAL

L'invention concerne un dispositif et un procédé de télédétection laser.

Plus précisément, l'invention concerne un dispositif de télédétection connu de l'homme du métier sous l'acronyme anglo-saxon LIDAR *(« Light Detection and Ranging »),* et un procédé d'interférométrie utilisant un tel dispositif.

ETAT DE L'ART

Les dispositifs de télédétection laser de type LIDAR sont des dispositifs de mesure à distance ayant de nombreuses applications, notamment en physique de l'atmosphère, géologie ou cartographie.

En particulier, ils permettent de mesurer à distance des caractéristiques physiques d'un volume de matière, par exemple dans l'atmosphère terrestre, ces caractéristiques pouvant notamment être la vitesse ou la composition dudit volume.

Ces dispositifs reposent sur l'émission d'un faisceau lumineux laser vers un volume de matière, la mesure et l'analyse des faisceaux lumineux réémis par ledit volume en direction du dispositif émetteur, en réponse à l'interaction avec ledit faisceau lumineux laser.

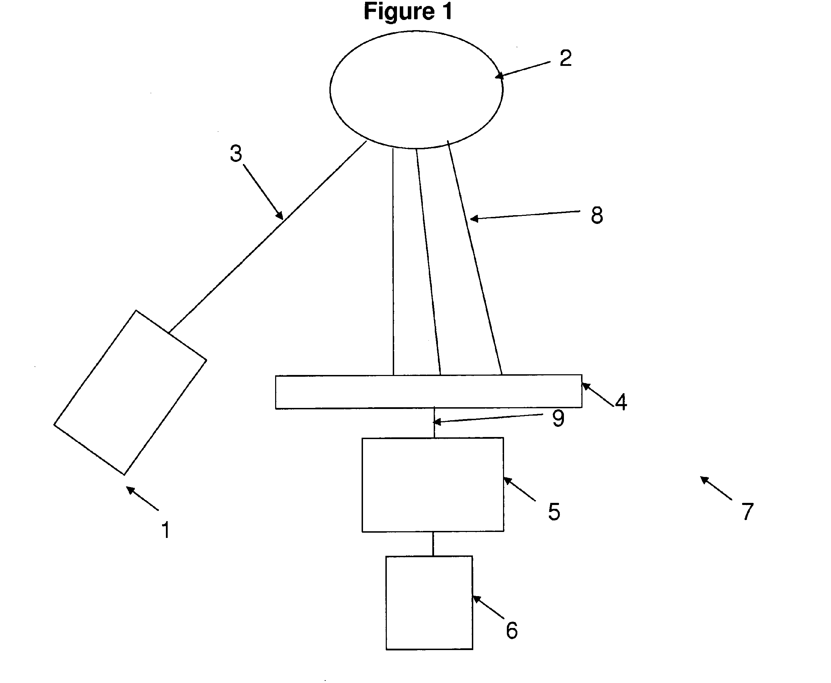

On a représenté schématiquement en figure 1 un dispositif de télédétection laser 7 de type LIDAR selon l'art antérieur.

Le dispositif comprend une source laser 1, apte à émettre un faisceau lumineux 3 vers un volume 2 de matière.

L'interaction entre le faisceau lumineux 3 émis et le volume 2 de matière provoque la diffusion de faisceaux lumineux 8. Les faisceaux lumineux diffusés 8 par le volume 2 de matière sont collectés par un dispositif optique de collection 4, qui est en général un télescope, et dirigés vers un dispositif de filtrage spectral 5.

Le dispositif de filtrage spectral 5 est un dispositif qui transmet les faisceaux lumineux collectés de manière variable en fonction de la fréquence desdits faisceaux, selon une fonction de transfert. La fonction de transfert caractérise la transmission des faisceaux lumineux en fonction de leur fréquence.

Il peut par exemple s'agir d'un interféromètre apte à transmettre les faisceaux lumineux collectés en fonction de la fréquence desdits faisceaux et d'une différence de marche ($\delta$) introduite dans ledit interféromètre.

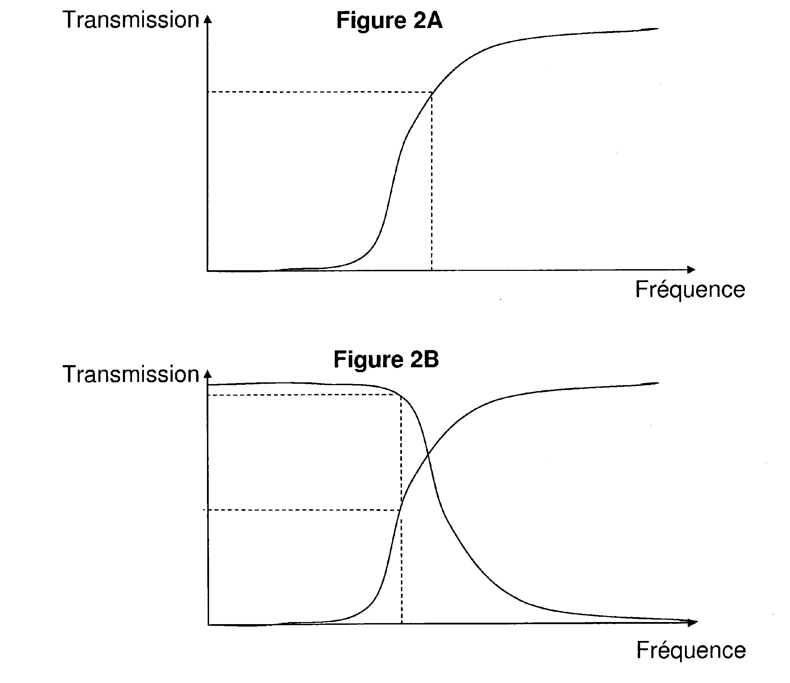

Des exemples d'une ou plusieurs fonctions de transfert sont représentés en figures 2A (cas d'un dispositif de filtrage spectral reposant sur un filtre spectral) et 2B (cas d'un dispositif de filtrage spectral reposant sur deux filtres spectraux utilisés simultanément).

Il existe ainsi une correspondance entre la transmission du faisceau lumineux pénétrant dans le dispositif de filtrage spectral et la fréquence dudit faisceau lumineux.

L'intensité des faisceaux lumineux ainsi transmis par le dispositif de filtrage spectral 5 est mesurée par l'intermédiaire d'un ou plusieurs détecteurs optiques 6 en sortie dudit dispositif de filtrage spectral 5.

En comparant l'intensité des faisceaux lumineux diffusés, collectés puis transmis par le dispositif de filtrage spectral avec l'intensité de faisceaux lumineux de référence émis par la source laser et directement transmis par le dispositif de filtrage spectral, on peut accéder à une mesure de décalage en fréquence par effet Doppler et en déduire par exemple la vitesse du volume de matière étudié.

Dans les dispositifs de l'art antérieur, la source laser est à émission spectrale monomode, c'est-à-dire que la source laser émet un faisceau lumineux autour d'une seule fréquence d'émission. En effet, si la source laser émet des modes fréquentiels à d'autres fréquences, chacun de ces modes va être transmis différemment par le dispositif de filtrage spectral, ce qui produit au final une mesure brouillée au niveau du détecteur optique, et par conséquent non exploitable.

De plus, il est nécessaire d'asservir l'unique fréquence d'émission de la source laser à la fonction de transfert du dispositif de filtrage spectral, afin que la fréquence d'émission du faisceau lumineux émis par la source laser soit bien positionnée par rapport à ladite fonction de transfert.

En général, un laser pilote à émission spectrale monomode est injecté dans une cavité laser constituée d'un milieu amplificateur solide et de miroirs à ses extrémités.

Ce laser pilote impose à la cavité laser une fréquence d'émission choisie pour être adaptée à la fonction de transfert du dispositif de filtrage spectral.

Pour éviter l'émission de modes fréquentiels parasites, il est nécessaire d'asservir la longueur optique de la cavité laser à cette fréquence d'émission.

Le plus souvent, un des miroirs de la cavité du laser est monté sur un moteur piézoélectrique, permettant le déplacement longitudinal dudit miroir. Un dispositif d'asservissement permet d'adapter en permanence la longueur de la cavité laser à la fréquence d'émission du laser monomode.

Cet asservissement est complexe et délicat à mettre en oeuvre, particulièrement dans des conditions d'environnement difficiles.

Ce type de dispositif est ainsi sensible aux perturbations mécaniques et/ou thermiques.

En particulier, une mauvaise injection du laser pilote ou un mauvais asservissement détériorent la qualité de l'émission laser en permettant l'émission de modes parasites, ce qui entraîne une erreur sur la mesure. Dans le cas d'un dispositif de filtrage spectral de type interféromètre, le contraste du signal mesuré en sortie de l'interféromètre va tendre à s'annuler.

Enfin, ce type de dispositif est coûteux et peu robuste.

De l'état de la technique, on connaît le document « Fibre-optic interferometric systems using low-coherence light sources » de Ning Y. et al. (Sensors and Actuators, vol. 30, 1er février 1992, pp. 181-192), qui décrit un interféromètre comprenant une source laser à émission spectrale multimode.

De plus, on connaît du document WO 2004/092767 et du document US 2007/046945 un dispositif de télédétection laser utilisant une source laser monomode.

Par ailleurs, on connaît du document EP 2042876 un interféromètre permettant de mesurer un paramètre dépendant de la vitesse à partir du décalage Doppler entre deux ondes.

## PRESENTATION DE L'INVENTION

L'invention propose de pallier ces inconvénients.

A cet effet, l'invention propose un dispositif de télédétection laser, comprenant une source laser, apte à émettre un faisceau lumineux vers un volume de matière, un dispositif optique de collection pour collecter des faisceaux lumineux diffusés par ledit volume en réponse au faisceau lumineux émis par la source laser, un interféromètre, apte à introduire une différence de marche pour créer des interférences à partir des faisceaux lumineux collectés, et au moins un détecteur optique pour mesurer l'intensité de faisceaux lumineux issus desdites interférences en sortie de l'interféromètre, ledit dispositif de télédétection laser étant caractérisé en que la source laser est à émission spectrale multimode, de sorte que le spectre dudit faisceau lumineux émis par ladite source laser présente plusieurs modes fréquentiels séparés d'un intervalle spectral libre, et le produit dudit intervalle spectral libre par la différence de marche de l'interféromètre est égal à la célérité de la lumière dans le vide.

L'invention est avantageusement complétée par les caractéristiques suivantes, prises seules ou en une quelconque de leur combinaison techniquement possible :

- la source laser est un laser à solide impulsionnel ;
- l'interféromètre comprend au moins une lame séparatrice pour séparer chaque faisceau lumineux collecté vers au moins deux chemins de l'interféromètre, chaque chemin comprenant des éléments optiques réflecteurs et/ou semi-réflecteurs pour introduire la différence de marche entre les faisceaux lumineux séparés par la lame séparatrice ;
- l'interféromètre comprend une lame de phase positionnée sur au moins l'un des chemins de l'interféromètre, une lame séparatrice de sortie pour recombiner puis séparer les faisceaux lumineux issus de chaque chemin de l'interféromètre, au moins un cube séparateur de polarisation pour séparer les polarisations des faisceaux lumineux issus de la lame séparatrice de sortie ;

- l'interféromètre est apte à créer des franges d'interférence à partir des faisceaux lumineux collectés, et le détecteur optique est un capteur d'images.
- l'interféromètre est de type Fabry-Perot ou Fizeau et comprend deux surfaces planes espacées et partiellement réfléchissantes.

L'invention propose également un procédé d'interférométrie utilisant un tel dispositif de télédétection laser.

L'invention présente de nombreux avantages.

Un avantage de l'invention est qu'elle utilise une source laser simple à mettre en oeuvre.

Un autre avantage de l'invention est qu'elle est peu sensible aux perturbations mécaniques et/ou thermiques.

Un autre avantage encore de l'invention est qu'elle permet d'utiliser une source laser dont l'émission spectrale est multimode.

Enfin, un autre avantage de l'invention est qu'elle est moins coûteuse que certains dispositifs de l'art antérieur.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, est une représentation schématique d'un dispositif de télédétection laser selon l'art antérieur ;
- la figure 2, déjà commentée, est une représentation d'une fonction de transfert (figure 2A) ou de plusieurs fonctions de transfert (figure 2B) d'un dispositif de filtrage spectral ;
- la figure 3 est une représentation schématique d'un dispositif de télédétection selon l'invention ;
- la figure 4 est une représentation du spectre fréquentiel d'un faisceau lumineux émis par une source laser à émission spectrale multimode dans un dispositif de télédétection selon l'invention ;
- la figure 5 est une représentation schématique d'un interféromètre pouvant être utilisé dans un dispositif de télédétection laser selon l'invention ;
- la figure 6 est une représentation schématique d'un interféromètre pouvant être utilisé dans un dispositif de télédétection laser selon l'invention ; et
- la figure 7 est une représentation de fonctions de transfert entre une entrée et des sorties d'un interféromètre pouvant être utilisé dans un dispositif de télédétection laser selon l'invention.

## DESCRIPTION DETAILLEE

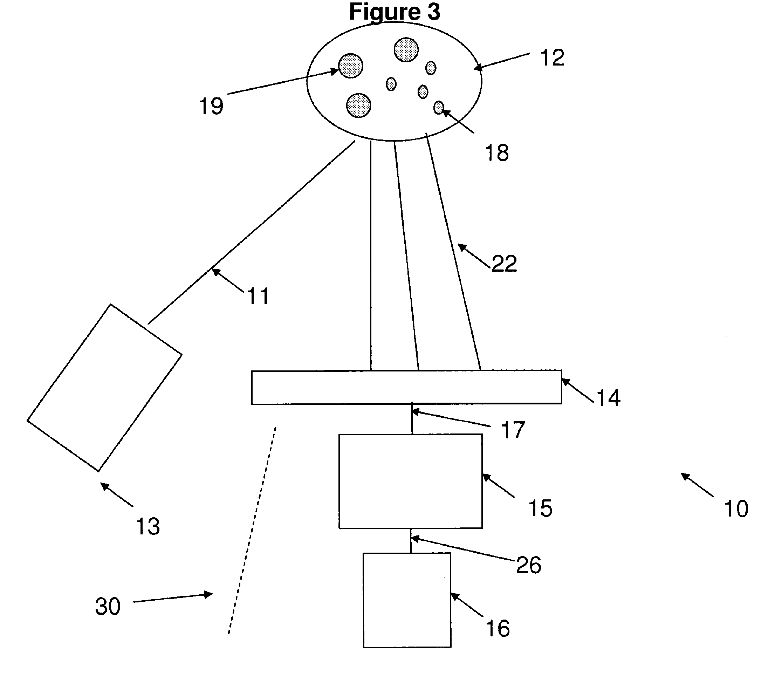

En figure 3, on a représenté un dispositif 10 de télédétection laser selon l'invention. Ce dispositif est du type LIDAR, selon l'acronyme anglo-saxon *« Light Detection and Ranging »* connu de l'homme du métier.

Le dispositif comprend une source laser 13, apte à émettre un faisceau lumineux 11 vers un volume 12 de matière.

Le volume 12 de matière est par exemple un volume de l'atmosphère terrestre ou d'une autre planète et peut notamment comporter des molécules 18 et/ou des particules 19.

Le dispositif 10 de télédétection définit un axe de visée 30.

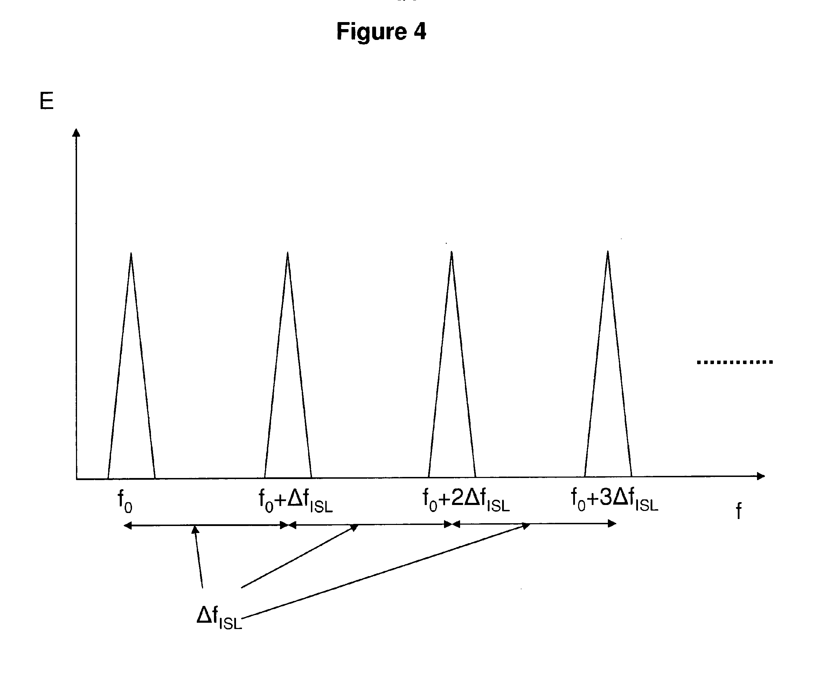

La source laser 13 est à émission spectrale multimode, ce qui signifie que le spectre du faisceau lumineux 11 émis par ladite source laser 13 présente plusieurs modes fréquentiels séparés d'un intervalle spectral libre ($\Delta f_{ISL}$), comme cela est représenté en figure 4. On entend par spectre le spectre fréquentiel, c'est-à-dire la répartition de l'énergie (E) de chaque mode en fonction de la fréquence (f) ou de la longueur d'onde ($\lambda$).

La répartition spectrale du faisceau lumineux 11 émis par la source laser 13 est composée d'un ensemble de modes ayant une largeur spectrale étroite et identique entre lesdits modes, chacun des modes étant centré autour d'une fréquence $f_0 + n.\Delta f_{ISL}$, avec n un entier, et $f_0$ la fréquence centrale d'émission du laser. La largeur spectrale du faisceau lumineux est de taille finie. L'énergie totale du faisceau lumineux 11 est répartie de manière moyenne entre les différents modes spectraux.

Avantageusement, la source laser 13 est à émission spectrale multimode.

La source laser 13 est avantageusement un laser à solide impulsionnel, comme par exemple un laser utilisant un cristal de Nd:KGW pompé par diodes. Par exemple, ce type de laser délivre des impulsions d'énergie environ égale à 30 mJ et de durée environ égale à 8 ns.

Dans l'exemple de réalisation de la figure 4, l'intervalle spectral libre ($\Delta f_{ISL}$) est de 1 GHz et le spectre total du faisceau lumineux s'étend sur 70 GHz. Chaque mode fréquentiel présente une largeur spectrale de 200MHz.

L'interaction entre le faisceau lumineux 11 émis par la source laser 13 et le volume 12 de matière provoque la diffusion de faisceaux lumineux 22 par ledit volume 12 de matière. Seule une partie du faisceau lumineux est rediffusée vers la source laser et dans la zone située face audit volume 12. Ce phénomène est appelé rétrodiffusion par l'homme du métier.

Les faisceaux lumineux diffusés 22 par le volume 12 de matière sont collectés par un dispositif optique de collection 14.

Le dispositif optique de collection 14 est avantageusement un télescope. Une valeur typique pour la pupille d'un tel télescope est de 10 cm.

Les faisceaux lumineux collectés 17 par le dispositif optique de collection 14 sont dirigés vers un interféromètre 15. Dans un mode de réalisation possible, on dispose avantageusement une fibre optique au niveau du foyer du télescope, la dite fibre optique étant orientée vers une entrée de l'interféromètre 15, pour diriger les faisceaux lumineux collectés 17 vers l'interféromètre 15.

L'interféromètre 15 est apte à introduire une différence de marche ($\delta$) pour créer des interférences à partir desdits faisceaux lumineux collectés 17.

En particulier, les interférences sont mises en oeuvre par séparation dans ledit interféromètre 15 de chaque faisceau lumineux collecté 17 et introduction d'une différence de marche ($\delta$) entre les faisceaux lumineux ainsi séparés.

Avantageusement, on utilise un interféromètre comprenant au moins une lame séparatrice pour séparer chaque faisceau lumineux collecté vers au moins deux chemins de l'interféromètre, chaque chemin comprenant des éléments optiques réflecteurs et/ou semi-réflecteurs pour introduire la différence de marche ($\delta$) entre les faisceaux lumineux séparés par la lame séparatrice. La recombinaison des faisceaux lumineux ainsi séparés permet de créer les interférences.

Un interféromètre comprenant deux chemins optiques et faisant interférer deux faisceaux lumineux est connu de l'homme du métier sous le nom d'interféromètre à deux ondes.

Il est à noter que tout type d'interféromètre peut être utilisé, comme cela sera détaillé par la suite.

L'intensité de faisceaux lumineux 26 issus des dites interférences est mesurée en sortie dudit interféromètre 15 par l'intermédiaire d'au moins un détecteur optique 16. L'interféromètre peut comprendre une ou plusieurs sorties et un ou plusieurs détecteurs optiques par sortie.

Tout interféromètre est caractérisé par une ou plusieurs fonctions de transfert, qui correspond à son pouvoir de transmission (T) des faisceaux lumineux entre une des entrées dudit interféromètre et une des sorties dudit interféromètre en fonction de la fréquence du faisceau lumineux. Cette transmission correspond au quotient entre l'intensité du faisceau lumineux à la sortie de l'interféromètre et l'intensité du faisceau lumineux à l'entrée de l'interféromètre.

En particulier, il est connu de l'homme du métier qu'une telle transmission (T) est périodique en fonction de la fréquence (f) du faisceau lumineux pénétrant dans l'interféromètre, avec une période égale à la célérité (c) de la lumière dans le vide divisée par la différence de marche ($\delta$) introduite dans l'interféromètre pour créer des interférences à partir dudit faisceau lumineux pénétrant dans l'interféromètre. Ladite transmission (T) s'écrit :

$$T(f + m\frac{c}{\delta}) = T(f),$$

avec m un entier et c la célérité de la lumière dans le vide (c=3.10$^8$ m.s$^{-1}$).

Dans le dispositif 10 de télédétection laser selon l'invention, la source laser 13 et l'interféromètre 15 sont conçus et choisis de sorte que le produit de l'intervalle spectral libre ($\Delta f_{ISL}$) du faisceau lumineux émis 11 par la source laser 13 par la différence de marche ($\delta$) de l'interféromètre 15 soit égal à la célérité (c) de la lumière dans le vide. Cette relation s'écrit :

$$\Delta f_{ISL} \delta = c \Leftrightarrow \Delta f_{ISL} = \frac{c}{\delta}$$

Avec cette relation structurelle entre la source laser 13 et l'interféromètre 15, la transmission (T) de l'interféromètre se réécrit :

$$T(f + m\Delta f_{ISL}) = T(f)$$

Grâce à la relation structurelle existant entre la source laser 13 et l'interféromètre 15, tous les modes fréquentiels émis par la source laser 13 auront une transmission identique à travers l'interféromètre 15. En effet, la transmission d'un mode fréquentiel émis par la source laser à la fréquence f$_0$+n$\Delta f_{ISL}$ s'écrira :

$$T((f_0 + n\Delta f_{ISL}) + m\Delta f_{ISL}) = T(f_0 + (n+m)\Delta f_{ISL})) = T(f_0)$$

Chaque mode fréquentiel émis par la source laser 13 vers le volume 12 de matière, puis diffusé par le dit volume 12 en direction de l'interféromètre 15 sera donc filtré par l'interféromètre 15 de manière identique.

Ceci implique qu'il n'est plus nécessaire d'utiliser un faisceau lumineux émis à une unique fréquence, comme cela était le cas dans les dispositifs de l'art antérieur.

De plus, il n'est plus nécessaire d'asservir la fréquence d'émission de la source laser 13 à la fonction de transfert de l'interféromètre 15 comme cela était dans le cas dans l'art antérieur.

Ceci est très avantageux puisque le dispositif de télédétection laser est plus simple et moins coûteux. En particulier, l'utilisation d'une source laser à émission multimode est aisée, ce type de source laser étant couramment utilisée et ne nécessitant pas d'appareillage lourd.

Le dispositif de télédétection selon l'invention est également moins sensible aux perturbations mécaniques et/ou thermiques.

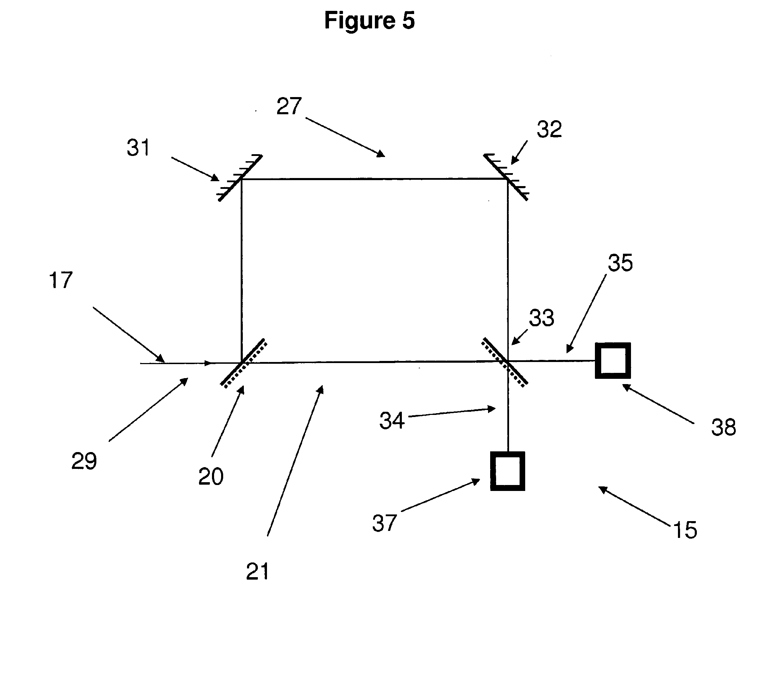

On a représenté en figure 5 un exemple d'interféromètre 15, dit de Mach-Zehnder, pouvant être utilisé dans le dispositif (10) de télédétection laser selon l'invention. Cet interféromètre est un exemple d'interféromètre à deux ondes.

Cet interféromètre 15 comprend au moins une lame séparatrice 20 pour séparer chaque faisceau lumineux collecté 17 vers deux chemins 21,27 de l'interféromètre 15, chaque chemin 21,27 comprenant des éléments optiques réflecteurs et/ou semi-réflecteurs pour introduire la différence de marche ($\delta$) entre les faisceaux lumineux séparés par la lame séparatrice 20.

L'un des chemins 21 correspond au trajet du faisceau lumineux collecté 17 entre la lame séparatrice 20 et une lame séparatrice de sortie 33.

L'autre chemin 27 correspond au trajet du faisceau lumineux collecté 17 entre la lame séparatrice 20, un premier et un deuxième miroirs 31,32 et la lame séparatrice de sortie 33.

Les miroirs 31,32 et les lames séparatrices 20,33 sont positionnés de sorte que la différence de marche ($\delta$) introduite entre les deux chemins 21,27 soit égale à la célérité (c) de la lumière dans le vide divisée par l'intervalle spectrale libre ($\Delta f_{ISL}$) du faisceau lumineux 11 émis par la source laser.

Par exemple, pour une source laser 13 émettant un faisceau lumineux 11 dont l'intervalle spectrale libre $\Delta f_{ISL}$ est de 1 GHz, la différence de marche $\delta$ est choisie comme égale à $c/\Delta f_{ISL}$, c'est-à-dire 300mm.

L'interféromètre comprend une entrée 29 et deux sorties 34,35, chacune des sorties comprenant un détecteur optique 37,38. Chaque détecteur optique 37,38 est avantageusement un détecteur photométrique apte à mesurer l'intensité des faisceaux lumineux issus des interférences en sortie 34,35 de l'interféromètre.

Il est également possible d'utiliser un interféromètre apte à créer des franges d'interférence à partir des faisceaux lumineux collectés. Dans ce cas, le détecteur optique est un capteur d'images, qui va prendre une image des dites franges d'interférence.

Un exemple d'un tel interféromètre est un interféromètre de Fabry-Perot ou un interféromètre Fizeau, qui comprend deux surfaces planes espacées et partiellement réfléchissantes, formant une cavité. Le faisceau lumineux collecté pénétrant dans cet interféromètre effectue de multiples aller-retour à l'intérieur de cette cavité, et ressort partiellement à chaque réflexion. Les différents faisceaux lumineux sortants interfèrent entre eux, donnant lieu à une figure d'interférences à ondes multiples constituée d'anneaux concentriques fins. Ce type d'interféromètre est connu de l'homme du métier sous le nom d'interféromètre à ondes multiples.

On décrira à présent un procédé d'interférométrie utilisant le dispositif 10 de télédétection laser selon l'invention, ainsi que la mesure de caractéristiques physiques d'un volume 12 de matière par l'intermédiaire d'un tel procédé, en référence aux figures 3 et 5.

Comme décrit précédemment, un faisceau lumineux 11 est émis vers ledit volume 12 de matière à partir d'une source laser 13 à émission spectrale multimode, le spectre dudit faisceau présentant plusieurs modes fréquentiels séparés d'un intervalle spectral libre $\Delta f_{ISL}$. Chaque mode est centré autour d'une fréquence $f_0 + n.\Delta f_{ISL}$, avec n un entier, et $f_0$ la fréquence centrale d'émission de la source laser. L'intensité du faisceau lumineux 11 émis par la source laser 13 est notée $I_0$.

En réponse au faisceau lumineux 11 émis par la source laser 13, le volume 12 de matière diffuse des faisceaux lumineux 22. Le dispositif de collection 12 collecte alors les faisceaux lumineux diffusés 22 par ledit volume 12 de matière, et les dirige vers l'entrée de l'interféromètre 15.

Chaque faisceau lumineux collecté 17 est séparé dans ledit interféromètre 15, dans lequel une différence de marche ($\delta$) introduite entre les faisceaux lumineux ainsi séparés permet de créer des interférences.

Comme énoncé précédemment, le produit de la différence de marche ($\delta$) de l'interféromètre 15 par l'intervalle spectral libre ($\Delta f_{ISL}$) de la source laser 13 est égal à la célérité (c) de la lumière dans le vide.

En sortie de l'interféromètre 15, l'intensité des faisceaux lumineux 26 issus desdites interférences est mesurée par l'intermédiaire d'au moins un détecteur optique 16.

Avantageusement, les mesures effectuées par le détecteur optique 16 sont traitées par un processeur pour en déduire des caractéristiques physiques du volume 12 de matière. Le processeur peut être intégré au dispositif 10 de télédétection, ou le cas échant être externe au dispositif 10 de télédétection.

Lorsque le dispositif 10 de télédétection laser est utilisé dans le domaine de la physique de l'atmosphère, les caractéristiques physiques mesurées sont avantageusement la vitesse du volume 12 de matière selon l'axe de visée 30 du dispositif 10 de télédétection et/ou le rapport de diffusion du volume 12 de matière entre les molécules 18 et les particules 19.

Ce rapport de diffusion est défini comme R=(Im+Ip)/Im, où Ip et Im sont respectivement les coefficients de rétrodiffusion particulaire et moléculaire correspondant à la fraction du faisceau lumineux 11 renvoyée respectivement par les particules et les molécules vers le dispositif 10 de télédétection. Chaque coefficient de rétrodiffusion Ip, Im correspond respectivement au quotient entre l'intensité réémise et l'intensité reçue par les particules et les molécules.

Par ailleurs, il est avantageux d'effectuer des mesures de référence en mesurant l'intensité de faisceaux lumineux issus d'interférences de référence produites par au moins un faisceau lumineux de référence émis par la source laser 13 et directement transmis à l'interféromètre 15. Ce faisceau lumineux de référence n'a donc pas interagi avec le volume 12 de matière.

La source laser 13 émet ainsi un faisceau lumineux qui est directement transmis à l'interféromètre 15, par exemple par une fibre optique entre la source laser et l'interféromètre.

L'intensité des faisceaux lumineux issus des interférences de référence et mesurée en sortie de l'interféromètre 15 par le détecteur optique est alors comparée avec l'intensité des faisceaux lumineux issus des interférences produites à partir des faisceaux lumineux diffusés par le volume 12 de matière et dirigés vers l'interféromètre 15 par l'intermédiaire du dispositif de collection 14.

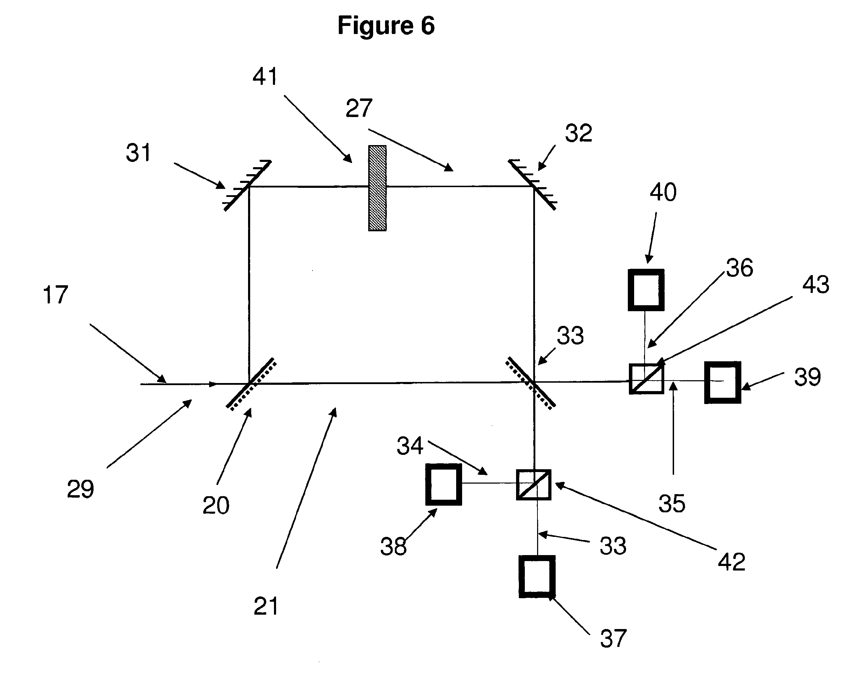

Dans un mode de réalisation de l'invention, l'interféromètre 15 est un interféromètre de Mach-Zehnder. Dans la configuration de la figure 6, il comprend une entrée 29 et quatre sorties 33, 34, 35, 36.

L'interféromètre 15 comprend deux chemins 21,27 de longueur optique différente, permettant d'introduire une différence de marche ($\delta$) et donc de créer des interférences.

De plus, l'interféromètre 15 comprend une lame de séparation 20 pour séparer chaque faisceau lumineux collecté 17 pénétrant dans l'interféromètre 15. Il comprend par ailleurs une lame de phase 41 positionnée sur au moins l'un des chemins 27 de l'interféromètre 15, une lame séparatrice de sortie 33 pour recombiner puis séparer les faisceaux lumineux issus de chaque chemin 21,27 de l'interféromètre et interférant au niveau de ladite lame séparatrice de sortie 33, et au moins un cube séparateur de polarisation 42,43 pour séparer les polarisations des faisceaux lumineux issus de la lame séparatrice de sortie 33.

Ainsi chaque faisceau lumineux collecté 17 est séparé vers les deux chemins 21,27 de l'interféromètre par la lame de séparation 20. L'un des faisceaux issus de cette séparation est réfléchi sur un premier miroir 31, traverse une lame de phase 41, et est réfléchi sur un deuxième miroir 32 vers la lame séparatrice de sortie 33.

La lame de phase est avantageusement une lame quart d'onde, présentant deux axes principaux de déphasage et introduisant un déphasage de 90° entre les deux composantes du faisceau lumineux traversant ladite lame.

L'autre des faisceaux lumineux issu de la lame séparatrice 20 est directement dirigé vers la lame séparatrice de sortie 33.

Les faisceaux issus de la séparation opérée par la lame de séparation 20 interfèrent au niveau de la lame séparatrice de sortie 33 et sont à nouveaux séparés par la dite lame séparatrice de sortie 33 en deux faisceaux. Chacun des faisceaux issus de la lame séparatrice de sortie 33 rencontre un cube séparateur de polarisation 42,43 permettant de séparer les polarisations de chacun de ces faisceaux, correspondant aux deux axes principaux de déphasage de la lame quart d'onde.

Au total, quatre faisceaux lumineux sortent donc de l'interféromètre 15, et leur intensité est mesurée au niveau des quatre sorties 33,34,35,36 de l'interféromètre 15 par l'intermédiaire de quatre détecteurs optiques 37,38,39,40, de type capteur photométrique.

La fonction de transfert entre l'entrée et chacune des sorties de l'interféromètre, c'est-à-dire la transmission (T) des faisceaux lumineux en fonction de la fréquence (f) desdits faisceaux lumineux pénétrant dans l'interféromètre s'écrit selon les équations suivantes :

$$T_{29->33}(f) = \frac{1}{4}(1 + \sin(\frac{2\pi.\delta.f}{c}))$$

$$T_{29->34}(f) = \frac{1}{4}(1 + \cos(\frac{2\pi.\delta.f}{c}))$$

$$T_{29->35}(f) = \frac{1}{4}(1 - \sin(\frac{2\pi.\delta.f}{c}))$$

$$T_{29->36}(f) = \frac{1}{4}(1 - \cos(\frac{2\pi.\delta.f}{c})),$$

où $T_{i->j}$ correspond à la transmission d'un faisceau lumineux pénétrant dans l'interféromètre au niveau de l'entrée (i), et ressortant au niveau de la sortie (j) -

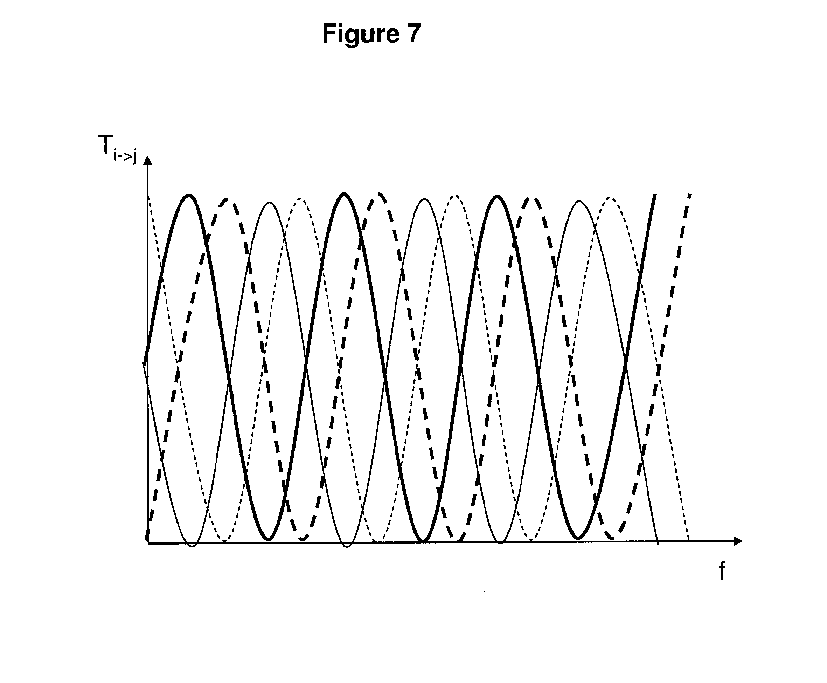

Les transmissions $T_{i->j}$ sont schématisées en figure 7. Comme on peut le constater, à chaque fréquence (f) du faisceau lumineux 17 pénétrant dans l'interféromètre 15 correspond un quadruplet de valeurs de transmission. Ce quadruplet est unique ce qui permet de lever les indéterminations en fréquence pouvant exister dans certains interféromètres ne comportant que deux sorties. La configuration de l'interféromètre 15, comprenant quatre sorties à transmission différente, est donc avantageuse.

Chaque détecteur optique 37,38,39,40 mesure un signal dont l'intensité S est une convolution spectrale de la transmission T entre l'entrée et chaque sortie de l'interféromètre par le spectre fréquentiel du faisceau lumineux collecté 17 pénétrant dans l'interféromètre. L'intensité $S_i$ mesurée par chaque détecteur i est modélisable sous la forme :

$$S_{37}(f) = \frac{1}{4}I_0(1 + M\sin(\frac{2\pi.\delta.(f_0 + df)}{c}))$$

$$S_{38}(f) = \frac{1}{4}I_0(1 + M\cos(\frac{2\pi.\delta.(f_0 + df)}{c}))$$

$$S_{39}(f) = \frac{1}{4}I_0(1 - M\sin(\frac{2\pi.\delta.(f_0 + df)}{c}))$$

$$S_{40}(f) = \frac{1}{4}I_0(1 - M\cos(\frac{2\pi.\delta.(f_0 + df)}{c}))$$

Dans ces expressions, le terme df correspond au décalage Doppler causé par le déplacement du volume 12 de matière. Ainsi, df = 2(v/c).$f_0$, avec v la vitesse du volume 12 de matière dans l'axe de visée 30 du dispositif de télédétection, et c la célérité de la lumière dans le vide.

Par ailleurs, le terme M correspond au contraste des interférences produites en sortie de l'interféromètre, et dépend notamment de la composition du volume 12 de matière et accessoirement de l'interféromètre 15.

Ces mesures d'intensité S permettent de déterminer le rapport de diffusion entre les molécules et les particules.

En effet, les particules 19 vont rétrodiffuser le faisceau lumineux 11 émis par la source laser 13 en décalant le spectre dudit faisceau lumineux 11 mais sans modifier sa largeur spectrale. Par conséquent, les faisceaux lumineux diffusés 22 par les particules 19 et dirigés vers l'interféromètre 15 par le dispositif de collection vont créer des interférences dont le contraste $M_p$ est élevé.

A contrario, les molécules 18 vont rétrodiffuser le faisceau lumineux 11 émis par la source laser 13 en décalant et en élargissant le spectre dudit faisceau lumineux, en raison de l'agitation thermique desdites molécules 18. Par conséquent, les faisceaux lumineux diffusés par les molécules et dirigés vers l'interféromètre 15 par le dispositif de collection 14 vont créer des interférences dont le contraste $M_m$ est nettement inférieur à $M_p$.

Les valeurs de contraste $M_p$ et $M_m$ sont modélisées à partir de la connaissance a priori de la composition du volume 12 de matière, et le cas échéant du type d'interféromètre. Elles peuvent êtres modélisées à partir de simulations ou de mesures in situ.

Le rapport de diffusion R entre les molécules et les particules est alors déterminé à partir des intensités S mesurées par les détecteurs optiques 37,38,39,40 via les relations :

$$R = \frac{(Mp - Mm)}{(Mp - M)},$$

avec

$$M = \sqrt{Q_1^2 + Q_2^2} \text{ et } Q_1 = \frac{S_{37} - S_{39}}{S_{37} + S_{39}}, \quad Q_2 = \frac{S_{40} - S_{38}}{S_{40} + S_{38}}$$

Alternativement, il est avantageux d'estimer la vitesse du volume 12 de matière selon l'axe de visée 30 du dispositif 10 de télédétection.

Pour améliorer la précision de l'estimation de la vitesse, la source laser 13 émet un faisceau lumineux qui est directement dirigé vers l'interféromètre 15, afin de constituer des interférences de référence.

Les détecteurs optiques mesurent alors des intensités de référence $S_{37}^{ref}$, $S_{38}^{ref}$, $S_{39}^{ref}$ $S_{40}^{ref}$. Ces intensités correspondent respectivement aux intensités $S_{37}(f)$ $S_{38}(f)$, $S_{39}(f)$ et $S_{40}(f)$ avec $M=M_p$ et $df=0$.

La vitesse du volume de matière selon l'axe de visée 30 du dispositif 10 de télédétection est déterminée par l'intermédiaire des expressions :

$$V = \frac{c^2}{4\pi\delta f_0}(\arctan(\frac{Q_1}{Q_2}) - \arctan(\frac{Q_{01}}{Q_{02}}))\,,$$

avec

$$Q_{01} = \frac{S_{37}^{ref} - S_{39}^{ref}}{S_{37}^{ref} + S_{39}^{ref}} \text{ et } Q_{01} = \frac{S_{38}^{ref} - S_{40}^{ref}}{S_{38}^{ref} + S_{40}^{ref}}$$

Les expressions permettant de déterminer le rapport de diffusion des particules et des molécules ainsi que la vitesse du volume de matière selon l'axe de visée du dispositif de télédétection peuvent être transposées à tout autre type d'interféromètre.

Il peut s'agir d'interféromètres à deux ondes (Mach-Zehnder, Michelson), ou d'interféromètre à ondes multiples (Fabry-Pérot, Fizeau).

Dans le cas d'interféromètres ayant une configuration différente de celle de la figure 6, les expressions des transmissions entre les entrées et les sorties de l'interféromètre, de même que les combinaisons des différentes intensités mesurées permettant de déterminer le rapport de diffusion et/ou la vitesse du volume de matière, seront modifiées en fonction du type d'interféromètre et de sa configuration.

Dans le cas où l'on utilise un interféromètre apte à mettre en oeuvre des franges d'interférence, l'on déduit de la position et du contraste desdites franges mesurées par un ou plusieurs capteurs image le rapport de diffusion des molécules et particules ainsi que la vitesse du volume 12 de matière dans l'axe de visée du dispositif 10 de télédétection.

Le dispositif 10 de télédétection laser selon l'invention offre une solution simple, efficace et robuste, permettant une utilisation au sol ou en vol et ce dans de nombreux domaines techniques (géographie, géologie, sismologie, télédétection et physique de l'atmosphère...).

**Revendications**

1. Dispositif (10) de télédétection laser, comprenant
   une source laser (13), apte à émettre un faisceau lumineux (11) vers un volume (12) de matière,
   un dispositif optique de collection (14) pour collecter des faisceaux lumineux diffusés par ledit volume (12) en réponse au faisceau lumineux (11) émis par la source laser (13),
   un interféromètre (15), apte à introduire une différence de marche ($\delta$) pour créer des interférences à partir des faisceaux lumineux collectés, et
   au moins un détecteur optique (16) pour mesurer l'intensité de faisceaux lumineux issus desdites interférences en sortie de l'interféromètre (15),
   ledit dispositif (10) de télédétection laser étant caractérisé en que :
   la source laser (13) est à émission spectrale multimode, de sorte que le spectre dudit faisceau lumineux (11) émis par ladite source laser (13) présente plusieurs modes fréquentiels séparés d'un intervalle spectral libre ($\Delta f_{ISL}$), et le produit dudit intervalle spectral libre ($\Delta f_{ISL}$) par la différence de marche ($\delta$) de l'interféromètre (15) est égal à la célérité (c) de la lumière dans le vide.

2. Dispositif selon la revendication 1, dans lequel la source laser (13) est un laser à solide impulsionnel.

**3.** Dispositif selon l'une des revendications 1 ou 2, dans lequel l'interféromètre (15) comprend au moins une lame séparatrice (20) pour séparer chaque faisceau lumineux collecté vers au moins deux chemins (21,27) de l'interféromètre (15), chaque chemin (21,27) comprenant des éléments optiques réflecteurs et/ou semi-réflecteurs pour introduire la différence de marche ($\delta$) entre les faisceaux lumineux séparés par la lame séparatrice (20).

**4.** Dispositif selon la revendication 3, **caractérisé en ce que** l'interféromètre comprend :

une lame de phase (41) positionnée sur au moins l'un des chemins (27) de l'interféromètre (15),
une lame séparatrice de sortie (33) pour recombiner puis séparer les faisceaux lumineux issus de chaque chemin de l'interféromètre,
au moins un cube séparateur de polarisation (42,43) pour séparer les polarisations des faisceaux lumineux issus de la lame séparatrice de sortie (25).

**5.** Dispositif selon l'une des revendications 1 à 4, dans lequel
l'interféromètre (15) est apte à créer des franges d'interférence à partir des faisceaux lumineux collectés, et
le détecteur optique (16) est un capteur d'images.

**6.** Dispositif selon l'une des revendications 1, 2 ou 5, dans lequel l'interféromètre est de type Fabry-Perot ou Fizeau et comprend deux surfaces planes espacées et partiellement réfléchissantes.

**7.** Procédé d'interférométrie dans un dispositif (10) de télédétection laser, **caractérisé en ce qu'**il comprend les étapes consistant à :

- émettre un faisceau lumineux (11) vers un volume (12) de matière à partir d'une source laser (13) à émission spectrale multimode, le spectre dudit faisceau présentant plusieurs modes fréquentiels séparés d'un intervalle spectral libre ($\Delta f_{ISL}$),
- collecter des faisceaux lumineux diffusés par ledit volume (12) de matière par l'intermédiaire d'un dispositif de collection (14), en réponse au faisceau lumineux émis par la source laser (13), et les diriger vers un interféromètre (15),
- mettre en oeuvre des interférences dans l'interféromètre (15) à partir desdits faisceaux lumineux collectés, par séparation dans ledit interféromètre de chaque faisceau lumineux collecté et introduction d'une différence de marche ($\delta$),
le produit de la différence de marche ($\delta$) de l'interféromètre (15) par l'intervalle spectral libre ($\Delta f_{ISL}$) de la source laser (13) étant égal à la célérité (c) de la lumière dans le vide, et
- mesurer l'intensité des faisceaux lumineux (26) issus desdites interférences par l'intermédiaire d'au moins un détecteur optique (16).

**8.** Procédé selon la revendication 7, dans lequel on déduit de la mesure de l'intensité des faisceaux lumineux issus desdites interférences des caractéristiques physiques du volume (12) de matière.

**9.** Procédé selon l'une des revendications 7 ou 8, comprenant l'étape consistant à
comparer la mesure de l'intensité des faisceaux lumineux issus desdites interférences avec
la mesure de l'intensité de faisceaux lumineux issus d'interférences de référence produites par au moins un faisceau lumineux de référence émis par la source laser (13) et directement transmis à l'interféromètre (15), pour en déduire des caractéristiques physiques du volume (12) de matière.

**10.** Procédé selon l'une des revendications 7 à 9, dans lequel le volume (12) de matière comprenant des molécules (18) et des particules (19), l'on déduit de la mesure de l'intensité des faisceaux lumineux issus desdites interférences le rapport de diffusion entre les molécules (18) et les particules (19).

**11.** Procédé selon l'une des revendications 7 à 10, dans lequel l'on déduit de la mesure de l'intensité des faisceaux lumineux issus desdites interférences la vitesse du volume (12) de matière selon un axe de visée (24) du dispositif (10) de télédétection laser.

**12.** Procédé selon l'une des revendications 7 à 11, dans lequel le détecteur optique étant un capteur d'images, le capteur d'images mesure l'image de franges d'interférences, et l'on déduit de la position et du contraste desdites franges les caractéristiques du volume de matière.

**13.** Application du procédé selon l'une des revendications 7 à 12 à la mesure du rapport de diffusion entre des molécules et des particules dans l'atmosphère d'une planète et/ou à la mesure de la vitesse d'un volume de matière de l'atmosphère d'une planète suivant l'axe de visée du dispositif (10) de télédétection.

## Claims

**1.** Laser remote detection device (10), comprising
a laser source (13), suitable for emitting a light beam (11) to a material volume (12),
an optical collection device (14) for collecting light beams scattered by said volume (12) in response to the light beam (11) emitted by the laser source (13),
an interferometer (15), suitable for introducing a path length difference ($\delta$) for creating interferences using the light beams collected, and
at least one optical detector (16) for measuring the intensity of light beams from said interferences output by the interferometer (15),
said laser remote detection device (10) being **characterised in that**:
the laser source (13) is of the multimode spectral emission type, such that the spectrum of said light beam (11) emitted by said laser source (13) has a plurality of frequency modes separated by a free spectral interval ($\Delta f_{ISL}$), and the product of said free spectral interval ($\Delta f_{ISL}$) by the path length difference ($\delta$) of the interferometer (15) is equal to the velocity (c) of light in vacuum.

**2.** Device according to claim 1, wherein the laser source (13) is a pulsed solid state laser.

**3.** Device according to any of claims 1 or 2, wherein the interferometer (15) comprises
at least one beam splitter plate (20) for splitting each light beam collected towards at least two paths (21, 37) of the interferometer (15),
each path (21, 27) comprising reflective and/or semi-reflective optical elements for introducing the path length difference ($\delta$) between the light beams split by the beam splitter plate (20).

**4.** Device according to claim 3, **characterised in that** the interferometer comprises:

a phase plate (41) positioned on at least one of the paths (27) of the interferometer (15),
an output beam splitter plate (33) for recombining and separating the light beams from each interferometer path,
at least one polarising beam splitter cube (42, 43) for splitting the polarisations of the light beams from the output beam splitter plate (25).

**5.** Device according to any of claims 1 to 4, wherein
the interferometer (15) is suitable for creating fringe lines from the light beams collected, and
the optical detector (16) is an image sensor.

**6.** Device according to any of claims 1, 2 or 5, wherein the interferometer is of the Fabry-Perot or Fizeau type and comprises two spaced-apart and partially reflective plane surfaces.

**7.** Interferometry method in a laser remote detection device (10), **characterised in that** it comprises steps consisting of:

- emitting a light beam (11) towards a material volume (12) from a multimode spectral emission laser source (13), the spectrum of said beam having a plurality of frequency mode separated by a free spectral interval ($\Delta f_{ISL}$),
- collecting light beams scattered by said material volume (12) via a collection device (14), in response to the light beam emitted by the laser source (13), and routing same to an interferometer (15),
- implementing interferences in the interferometer (15) using said light beams collected, by splitting each light beam collected in said interferometer and introducing a path length difference ($\delta$), the product of the path length difference ($\delta$) of the interferometer (15) by the free spectral interval ($\Delta f_{ISL}$) of the laser source (13) being equal to the velocity (c) of light in vacuum, and
- measuring the intensity of the light beams (26) from said interferences by means of at least one optical detector (16).

**8.** Method according to claim 7, wherein the measurement of the intensity of the light beams from said interferences is used to deduce the physical characteristics of the material volume (12).

9. Method according to any of claims 7 or 8, comprising the step consisting of
comparing the measurement of the intensity of the light beams from said interferences with
the measurement of the intensity of light beams from reference interferences produced by at least one reference
light beam emitted by the laser source (13) and transmitted directly to the interferometer (15), so as to deduce the
physical characteristics of the material volume (12).

10. Method according to any of claims 7 to 9, wherein the material volume (12) comprising molecules (18) and particles
(19), the measurement of the intensity of the light beams from said interferences is used to deduce the scattering
ratio between the molecules (18) and the particles (19).

11. Method according to any of claims 7 to 10, wherein the measurement of the intensity of the light beams from said
interferences is used to deduce the speed of the material volume (12) along an observation axis (24) of the laser
remote detection device (10).

12. Method according to any of claims 7 to 11, wherein the optical detector being an image sensor,
the image sensor measures the image of interference fringes, and
the characteristics of the material volume are deduced from the position and contrast of said interference fringes.

13. Application of the method according to any of claims 7 to 12 for measuring the scattering ratio between molecules
and particles in the atmosphere of a plane and/or for measuring the speed of a volume of material of the atmosphere
of a planet along the observation axis of the remote detection device (10).

**Patentansprüche**

1. Vorrichtung (10) zur Laser-Ferndetektion, Folgendes umfassend:

   eine Laserquelle (13), die dafür eingerichtet ist, einen Lichtstrahl (11) zu einem Volumen (12) mit Materie
   auszusenden,
   eine optische Aufnahmevorrichtung (14) zum Erfassen von Lichtstrahlen, die von dem Volumen (12) in Reaktion
   auf den von der Laserquelle (13) ausgesendeten Lichtstrahl (11) rückgestreut werden,
   ein Interferometer (15), das dafür eingerichtet ist, einen Wegunterschied ($\delta$) einzuführen, um ausgehend von
   den erfassten Lichtstrahlen Interferenzen zu erzeugen, und
   wenigstens einen optischen Detektor (16) zum Messen der Intensität von Lichtstrahlen, die aus den Interferenzen
   am Ausgang des Interferometers (15) kommen,
   wobei die Vorrichtung (10) zur Laser-Ferndetektion **dadurch gekennzeichnet ist, dass**
   die Laserquelle (13) eine spektrale Multimode-Abstrahlung aufweist, derart, dass das Spektrum des von der
   Laserquelle (13) ausgesendeten Lichtstrahls (11) mehrere Frequenzmoden umfasst, die durch einen freien
   Spektralabstand ($\Delta f_{ISL}$) getrennt sind, und
   das Produkt des freien Spektralabstands ($\Delta f_{ISL}$) mit dem Wegunterschied ($\delta$) des Interferometers (15) gleich
   der Vakuumlichtgeschwindigkeit (c) ist.

2. Vorrichtung nach Anspruch 1, bei der die Laserquelle (13) ein gepulster Feststofflaser ist.

3. Vorrichtung nach einem der Ansprüche 1 oder 2, bei der das Interferometer (15) Folgendes umfasst:

   wenigstens eine Strahlteilerplatte (20), um jeden erfassten Lichtstrahl auf wenigstens zwei Pfade (21, 27) des
   Interferometers (15) aufzuteilen,
   wobei jeder Pfad (21, 27) reflektierende und/oder halb-reflektierende optische Elemente umfasst, um den Wegunterschied ($\delta$) zwischen den Lichtstrahlen einzuführen, die durch die Strahlteilerplatte (20) aufgeteilt wurden.

4. Vorrichtung nach Anspruch 3, **dadurch gekennzeichnet, dass** das Interferometer Folgendes umfasst:

   eine Phasenplatte (41), die in wenigstens einem der Pfade (27) des Interferometers (15) angeordnet ist,
   eine Ausgangs-Strahlteilerplatte (33), um die Lichtstrahlen, die von jedem Pfad des Interferometers kommen,
   wieder zu vereinigen und anschließend aufzuteilen,
   wenigstens einen Polarisations-Strahlteilerwürfel (42, 43), um die Polarisationen der Lichtstrahlen zu trennen,
   die von der Ausgangs-Strahlteilerplatte (25) kommen.

**5.** Vorrichtung nach einem der Ansprüche 1 bis 4, bei der
das Interferometer (15) dafür eingerichtet ist, ausgehend von den erfassten Lichtstrahlen Interferenzmuster zu erzeugen, und
wobei der optische Detektor (16) ein Bildsensor ist.

**6.** Vorrichtung nach einem der Ansprüche 1, 2 oder 5, bei der das Interferometer vom Typ Fabry-Perot oder Fizeau ist und zwei ebene Oberflächen umfasst, die einen Abstand haben und teilweise reflektierend sind.

**7.** Interferometrieverfahren für eine Vorrichtung (10) zur Laser-Ferndetektion, **dadurch gekennzeichnet, dass** es die Schritte umfasst, die aus Folgendem bestehen:

- Aussenden eines Lichtstrahls (11) zu einem Volumen (12) mit Materie, ausgehend von einer Laserquelle (13), die eine spektrale Multimode-Abstrahlung aufweist, wobei das Spektrum des Strahls mehrere Frequenzmoden umfasst, die durch einen freien Spektralabstand ($\Delta f_{ISL}$) getrennt sind,
- Erfassen von Lichtstrahlen, die von dem Volumen (12) mit Materie in Reaktion auf den von der Laserquelle (13) ausgesendeten Lichtstrahl rückgestreut werden, und dies mittels einer Aufnahmevorrichtung (14), wobei diese in Richtung eines Interferometers (15) gelenkt werden,
- Erzeugen von Interferenzen im Interferometer (15), und dies ausgehend von den erfassten Lichtstrahlen und durch das Aufteilen jedes erfassten Lichtstrahls im Interferometer und das Einführen eines Wegunterschieds ($\delta$), wobei das Produkt des Wegunterschieds ($\delta$) des Interferometers (15) mit dem freien Spektralabstand ($\Delta f_{ISL}$) der Laserquelle (13) gleich der Vakuumlichtgeschwindigkeit (c) ist, und
- Messen der Intensität der von den Interferenzen kommenden Lichtstrahlen (26) mittels wenigstens eines optischen Detektors (16).

**8.** Verfahren nach Anspruch 7, bei dem aus der Messung der Intensität der von den Interferenzen kommenden Lichtstrahlen physikalische Eigenschaften des Volumens (12) mit Materie abgeleitet werden.

**9.** Verfahren nach einem der Ansprüche 7 oder 8, das den Schritt umfasst, der aus Folgendem besteht:

Vergleichen der Messung der Intensität der von den Interferenzen kommenden Lichtstrahlen mit der Messung der Intensität der Lichtstrahlen, die von Referenz-Interferenzen kommen, die von wenigstens einem Referenz-Lichtstrahl erzeugt werden, der von der Laserquelle (13) ausgesendet und direkt zum Interferometer (15) geleitet wird, um hieraus physikalische Eigenschaften des Volumens (12) mit Materie abzuleiten.

**10.** Verfahren nach einem der Ansprüche 7 bis 9, bei dem das Volumen (12) mit Materie Moleküle (18) und Teilchen (19) umfasst, wobei aus der Messung der Intensität der von den Interferenzen kommenden Lichtstrahlen das Rückstreuverhältnis zwischen den Molekülen (18) und den Teilchen (19) abgeleitet wird.

**11.** Verfahren nach einem der Ansprüche 7 bis 10, bei dem aus der Messung der Intensität der von den Interferenzen kommenden Lichtstrahlen die Geschwindigkeit des Volumens (12) mit Materie entlang einer Visierachse (24) der Vorrichtung (10) zur Laser-Ferndetektion abgeleitet wird.

**12.** Verfahren nach einem der Ansprüche 7 bis 11, bei dem der optische Detektor ein Bildsensor ist,
wobei der Bildsensor das Bild der Interferenzmuster erfasst, und
aus der Position und dem Kontrast der Muster die Eigenschaften des Volumens mit Materie abgeleitet werden.

**13.** Anwendung des Verfahrens nach einem der Ansprüche 7 bis 12 bei der Messung des Rückstreuverhältnisses zwischen Molekülen und Teilchen in der Atmosphäre eines Planeten und/oder bei der Messung der Geschwindigkeit eines Volumens mit Materie aus der Atmosphäre eines Planeten entlang der Visierachse der Vorrichtung (10) zur Ferndetektion.

**Figure 1**

EP 2 405 287 B1

Figure 2A

Figure 2B

Figure 3

Figure 4

EP 2 405 287 B1

## Figure 5

EP 2 405 287 B1

## Figure 6

EP 2 405 287 B1

Figure 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004092767 A
- US 2007046945 A
- EP 2042876 A

**Littérature non-brevet citée dans la description**

- **NING Y. ET AL.** Fibre-optic interferometric systems using low-coherence light sources. *Sensors and Actuators,* 01 Février 1992, vol. 30, 181-192